Europäisches Patentamt

European Patent Office

Office européen des brevets

(11) Publication number: **0 243 332**
A1

# (12) EUROPEAN PATENT APPLICATION

(21) Application number: **87850121.2**

(22) Date of filing: **13.04.87**

(51) Int. Cl.³: **G 06 F 11/22**
**G 11 C 29/00**

(30) Priority: **18.04.86 SE 8601800**

(43) Date of publication of application:
**28.10.87 Bulletin 87/44**

(84) Designated Contracting States:
**BE DE FR GB IT NL**

(71) Applicant: **TELEFONAKTIEBOLAGET L M ERICSSON**

**S-126 25 Stockholm(SE)**

(72) Inventor: **Ossfeldt, Bengt Erik**
**Svartlösavägen 250**
**S-125 31 Älvjsö(SE)**

(54) Method and apparatus for monitoring an error-tolerant computer store.

(57) An error-tolerant computer store which includes memory elements (1) addressable in groups, each element storing a binary bit, and an error correction logic (5) is monitored substantially automatically with the aid of an identification signal generator (12), an alarm signal generator (18) and inversion circuits (8, 10) connected to the elements (1) and to the logic (5). The identification signal generator (12) generates an identification signal for marking one of the elements (1) and two of the circuits (8, 10). The identification signal preferably activates the marked circuit (10) for inversion this circuit having its input connected to the marked memory element and its output connected to the error correction logic, the logic is thus being consciously fed with a bit having an incorrect binary valve. If the logic (5) neglects to identify and correct the defective binary bit, the alarm signal generator generates an alarm signal indicating a functional fault in the error correction logic.

EP 0 243 332 A1

METHOD AND APPARATUS FOR MONITORING AN ERROR-TOLERANT COMPUTER STORE.

TECHNICAL FIELD

The present invention relates to a method and apparatus for monitoring an error-tolerant computer store, which includes memory elements addressable in groups, each element storing a binary bit, the store also including an error correction logic which, before storing a multi-bit data word, generates a plurality of parity bits assigned to the word, these being transmitted together with the word to an addressed memory element group, and which logic, after storage, receives the data and parity bits coming from the memory element group, identifies such as a so-called soft one-bit error that has occurred during storage, corrects the identified binary bit and sends a word agreeing with the incoming data word to the output of the store.

BACKGROUND ART

Large computer stores are built today with comparatively cheap integrated semiconductor circuits. However, during storage there occur sporadically so-called soft errors, caused by     particles from natural radioactive disintegration of atoms in the memory capsule material. It is therefore usual to provide the data words which are to be stored in a semiconductor store with a plurality of parity bits arranged so that a one-bit error can be identified and corrected when reading out from the store. Generation and control of the parity bits as well as sporadically, required error correction is carried out with the aid of an error correction logic, e.g. Signetics 2960 Error Detection and Correction Unit, which is described in "Signetics Product Specification - May 1985".

Further to the mentioned soft errors, there also occur in the storage of occasional memory elements bit errors caused by local remaining defects in the semiconductor circuits, as well as so-called hidden errors caused by a logical "1" or "0" not being able to be unambiguously stored during a refreshing interval, which is of the order of magnitude 2 ms. As long as only one of the above-mentioned errors occurs per memory addressing operation, there is obtained, due to the error correction logic, an error-tolerant computer store

2

which can be considered without error when regarded from the outside.

So far error-tolerant computer stores have been monitored in the same way as older store structures, which are regarded as being operationally competent without error correction logic, i.e. within the framework of a general data processing monitoring process using test programs, the error detection and error localization in unduplicated computer systems, and using comparison between executive and reserve sides of duplicated real time computer systems.

DISCLOSURE OF INVENTION

A computer store including an error correction logic is only error-tolerant as long as the logic is capable of identifying and correcting bit errors caused by faulty memory elements. In normal operation the logic only has occasion to process immaculately stored data words, no error identification and error correction being carried out, and it is not possible to be sure of the correction capacity over a long time interval without trying it actively.

The invention affords substantially automatic monitoring of the error-tolerant computer store, which is completely independent of the above-mentioned general monitoring of the data processing system. The automatic monitoring increases operational reliability in storing data words and thus offloads the general monitoring system. The proposed automatic monitoring is achieved with the aid of a minimum hardware input and is carried out without a test program, i.e. without disturbing the normal data processing. In the first place, the error correction logic is monitored by consciously feeding it with an incorrect data bit, an alarm signal being generated if the logic is not capable of discovering and correcting the incorrect bit. In the second place, a hidden error in a memory element is detected by activating a bit inversion both before and after storing in the element, a warning signal being generated if the functionally competent logic identifies and corrects the doubly inverted bit.

The invention is characterized by the disclosures in the claims.

## BRIEF DESCRIPTION OF DRAWINGS

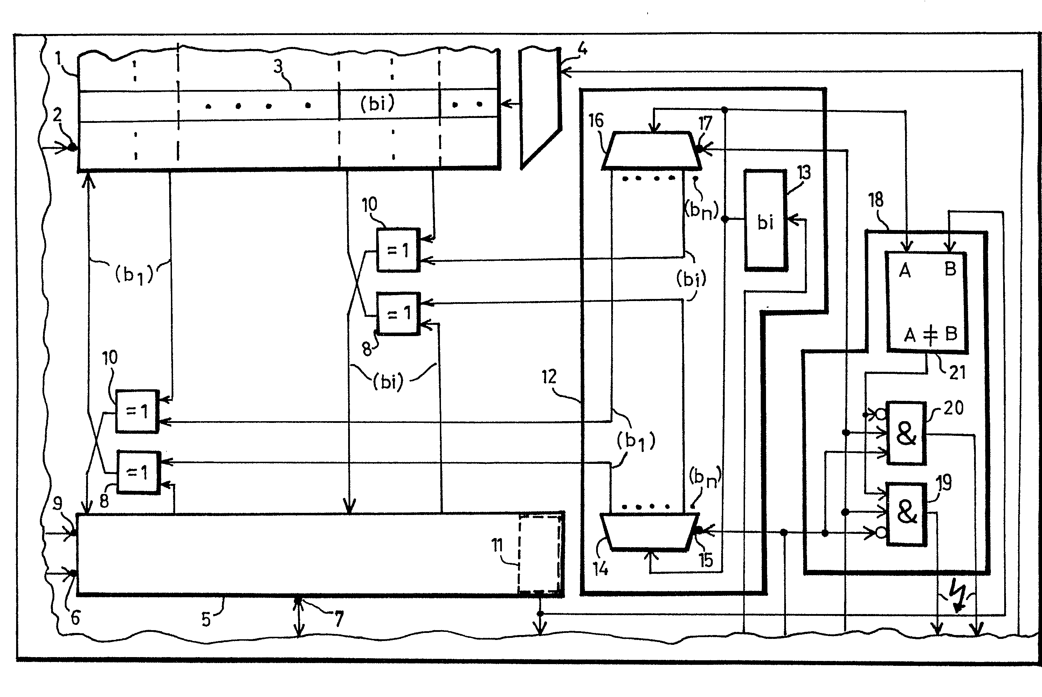

The invention will now be described in detail with reference to the accompanying drawing, on which as parts of a data processing system there are shown an error-tolerant computer store and a monitoring apparatus including an identification signal generator, inverting circuits and an alarm/warning signal generator.

## BEST MODE FOR CARRYING OUT THE INVENTION

A data processing system is equipped with a conventional semiconductor store 1, receiving write/read orders via control inputs 2 and including memory elements which are addressable in groups. A memory element group 3 is indicated on the drawing, and is assumed to be addressed by means of its assigned address received via an address decoder 4. The data processing system is further equipped with a conventional error correction logic 5 which, when it receives a write order on its control input 6 and a word including a plurality of binary data bits on its data word terminal 7, computes a plurality of parity bits and transmits the data and parity bits via first EXCLUSIVE-OR elements 8 to the memory element group 3, the binary bits then being written into their individual memory elements. When the error correction logic receives on its control input 9 a read order, due to which from the memory element group 3 via second EXCLUSIVE-OR elements 10 data and parity bits are received, the previously stored binary bits are examined, an established one-bit error being indicated by an error bit register 11 included in the logic, while the error is corrected so that the data word terminal 7 sends an immaculate data word. The mentioned memory elements, binary bits and EXCLUSIVE-OR elements are identified with the aid of the assigned bit indeces $b_1 - b_n$.

Each EXCLUSIVE-OR element 8 and 10, respectively, is provided with two inputs, of which one is connected to the error correction logic 5 and the computer store 1, respectively, while the other is connected to an identification signal generator 12. The identification signal generator is realized on the drawing with the aid of a bit index register 13 for registering one of the bit indices e.g. $b_i$, identified by the data processing system. The output of the bit index register 13 is connected to a first and a second bit index decoder. The first bit index decoder 14 is provided with a first activation terminal 15 and has its outputs connected to each of the mentioned first EXCLUSIVE-OR elements 8. The second bit index decoder 16 is provided with a second activation terminal 17 and has its outputs connected to each of the mentioned second EXCLUSIVE-OR elements 10. When the activation terminals 15 and 17 receive a binary "0", a binary "0" is obtained from all outputs of the bit index decoders independent of the contents in the bit index register 13, the EXCLUSIVE-OR elements 8 and 10 not affecting the value of the binary bits during the transfer from the error correction logic to the data store and vice versa. However, if for example the second binary index decoder 16 receives a binary "0" on its activation terminal 17, the identification signal generator sends a binary "0" as an identification signal, and due to this signal the EXCLUSIVE-OR element 10 assigned to the bit index $b_i$ inverts the binary bit, which the memeory element for this index sends during a read operation.

The error correction logic 5 is thus consciously fed with an incorrect binary value of the data bit with the index $b_i$. Data processing in the system is not disturbed, however, and an alarm and warning signal generator 18 connected to the identification signal generator 12 and to the logic 5 does not react for the consciously made error, as long as the logic is operationally competent, i.e. it corrects the incorrect bit and registers the index $b_i$ in its error bit register 11.

In principle, there is also obtained monitoring of the error correction logic 5 if the index decoder 14 is activated instead of the index decoder 16. In this case the consciously incorrect bit is already achieved during a write operation and the bit error exists during the entire storage time. It is then suitable to register in the data store, using a so-called tag bit, that the memory element group in question stores a consciously incorrect binary bit, and to generate an alarm signal if the logic does not identify and correct the bit error during reading a tag bit. The mentioned registration and reading of a tag bit is not illustrated on the drawing.

On the activation of both index decoders 14 and 16 during a long data processing period, the binary bits sent by the error correction logic 5 to the memory elements marked with the bit index $b_i$ and the binary bits which the marked memory elements send to the logic are inverted, i.e. a double inversion is carried out, which is not noticed from the outside, so that the data store normally behaves as though it were error-free. If it is found even so, that the error correction logic identifies the bit index $b_j$, there is a so-called hidden error in the memory element with this bit index that has been addressed for reading. The logic is indeed capable of correcting the hidden error, but the data processing system should be warned of it with the aid of the mentioned alarm and warning signal generator.

According to the drawing, the alarm and warning signal generator 18 includes a first and a second AND element 19 and 20 as well as a bit index comparator 21. One comparator input is connected to the bit index register 13 of the identification signal generator. Another comparator input is connected to the error bit register 11 of the error correction logic. The comparator output sends a binary "0" and "1", respectively for "like" and "unlike", respectively, with respect to the register contents. The mentioned AND elements 19 and 20 are each provided with three activation inputs, of which one is an inverting input.

The first AND element 19, which has its inverting input connected to the activation terminal 15 of the first bit index decoder and its two other inputs connected to the comparator 21 and to the activation terminal 17 of the second bit index decoder, is activated if a binary bit is written into the store without inversion by the associated EXCLUSIVE-OR element 8, but for reading it is subject to an inversion with the aid of the associated EXCLUSIVE-OR element 10 and if the bit index comparator reports "unlike". Consequently, a binary "1" sent by the first AND element 19 gives an alarm: the error correction logic 5 is operationally disabled.

The second AND element 20, which has its inverting input connected to the comparator 21 and its two other inputs connected to the activation terminals 15 and 17 of the two bit index decoders, is activated if a binary bit is inverted twice with the aid of the two associated EXCLUSIVE-OR elements 8 and 10 and if the bit index comparator reports "like". Consequently, a binary "1" sent by the second AND element 20 gives a warning: there is a hidden error in the memory element used in storing the binary bit.

Once again, it may be suitable to register information in the computer store with the aid of a tag bit if the memory element group in question stores an inverted binary bit. In this case, which is not illustrated on the drawing, the second AND element is not controlled by the activation of the first index decoder, but by the tag bit.

## CLAIMS

1    Method of monitoring an error-tolerant computer store, which includes memory elements (1, 3) addressable in groups, each element storing a binary bit, the store also including an error correction logic (5) which, before storing a multi-bit data word, generates a plurality of parity bits assigned to the word, these being transmitted together with the word to an addressed memory element group (3), and which logic after storage receives the data and parity bits coming from the memory element group, identifies such as a so-called soft one-bit error that has occurred during storage, corrects the identified binary bit and sends a word agreeing with the incoming data word to the output (7) of the store, characterized in

that an identification signal is generated for marking a memory element (3/bi/) associated with said element group (3),

that by means of the identification signal it is activated an inversion of the binary bit which the error correction logic (5) sends before storage to, and after storage receives from the marked element (3/bi/),

and that an alarm signal is generated if the bit which has been inverted once is not identified and corrected by the error correction logic, said alarm signal indicating a functional fault of the error correction logic (5).

2    Method as claimed in claim 1, characterized in that said single inversion is carried out during the transfer of the binary bit from the marked memory element 3/bi/) to the error correction logic (5).

3    Method as claimed in claim 2, characterized in

that an inversion is furthermore carried out by means of the identification signal during the transfer of the binary bit from the error correction logic (5) to the marked memory element (3/bi/),

and that a warning signal is generated if the bit inverted both before and after storage is identified and corrected by the error correction logic (5), said warning signal indicating a so-called hidden error in the marked memory element (3/bi).

4    Apparatus for monitoring an error-tolerant computer store according to claim 1, which includes memory elements (1, 3) addressable in groups, each element storing a binary bit, the store also including an error correction logic (5) which, before storing a multi-bit data word, generates a plurality of parity bits assigned to the word, these being transmitted together with the word to an addressed memory element group (3), and which logic after storage receives data and parity bits coming from the memory elements group, identifies such as a so called soft one-bit error that has occurred during storage, corrects the identified binary bit and sends a word agreeing with the incoming data word to the output (7) of the store, characterized by

an identification signal generator (12) for generating an identification signal with the aid of which a memory element (3/bi/) included in said element group (3) is marked,

an inversion circuit (10) for activating with the aid of the identification signal an inversion of the binary bit sent from the marked memory element (3/bi/) to the error correction logic (5),

and an alarm signal generator (8) for generating an alarm signal if the bit which has been inverted once is not identified and corrected by the error correction logic, said alarm signal indicating a faulty function of the error correction logic (5).

5    Apparatus as claimed in claim 4, characterized by

two inversion circuits (8 and 10) for activating with the aid of the identification signal a binary bit inversion both before and after storage in the marked memory element (3/bi/)

and a warning signal generator (18) for generating a warning signal if the doubly inverted binary bit is identified and corrected by the error correction logic (5).

said warning signal indicating a so-called hidden error in the marked memory
element (3/bi/).

# European Patent Office

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US- A-3 405 258 (H.C. GODOY ET AL) | . | G 06 F 11/22<br>G 11 C 29/00 |
| A | US- A-4 075 466 (B.E.R. JONSSON ET AL) | | |
| A | US- A-4 531 213 (J.H. SCHEUNEMAN) | | |
| A | EP-A2-0 012 017 (SPERRY CORPORATION) | | |
| A | EP-A2-0 034 070 (MOSTEK CORPORATION) | | |
| A | EP-A1-0 043 415 (INTERNATIONAL BUSINESS MACHINES CORPORATION) | | |
| A | EP-A2-0 043 902 (INTERNATIONAL BUSINESS MACHINES CORPORATION) | | |
| A | PATENT ABSTRACTS OF JAPAN, Vol. 7, No 60, (p. 182), abstract of JP 57-205 900 | | TECHNICAL FIELDS SEARCHED (Int. Cl.4)<br><br>G 06 F<br>G 11 C |
| A | PATENT ABSTRACTS OF JAPAN, Vol. 8, No 58, (p. 261), abstract of JP 58-207 155 | | |
| A | PATENT ABSTRACTS OF JAPAN, Vol. 8, No 105, (p. 274), abstract of JP 59-16055 | | |

The present search report has been drawn up for all claims

| Place of search | Date of completion of the search | Examiner |
|---|---|---|
| STOCKHOLM | 25-08-1987 | EDHBORG S. |